# EUROPEAN PATENT SPECIFICATION

(11) **EP 0 302 840 B1**
(45) Date of publication and mention of the grant of the patent: **17.03.1993**
(21) Application number: 88830328.6
(22) Date of filing: 26.07.1988
(51) Int. Cl.: B29C 51/14, A47G 1/00

(54) **Industrial process for the manufacture of holders for photographs for tombs or tombstones**
Industrielles Verfahren für die Herstellung von Lichtbilderhaltern für Gräber oder Grabsteine
Procédé industriel de fabrication de montures de photographies pour tombeaux on pour pierres tombales

(30) Priority: 06.08.1987 IT 63887
(43) Date of publication of application: 08.02.1989
(73) Proprietor: COLORPLEX DI PACI LINO, 61031 Bellocchi di Fano (PS) (IT)
(72) Inventor: Paci, Lino, I-61032 Fano (PS) (IT)
(74) Representative: Baldi, Claudio

(56) References cited:
- FR-A- 2 455 761
- GB-A- 301 346
- GB-A- 864 029
- US-A- 2 270 185
- US-A- 4 536 423

## Description

This patent application for an industrial invention concerns a new industrial process for the manufacture of holders, in plastic material, which are normally affixed to tombs or tombstones, into which holders a photograph of the deceased is inserted and sealed.

Currently, said holders are manufactured by joining two plates together which are injection moulded separately in plastic material, one of which acts as a support and is usually opaque and the other acting as a cover and obviously transparent, both of which are of a suitable shape to enable them to match exactly, when placed one over the other.

When the photograph has been positioned between the cover and the support, the assembled holder is then put into a heated oven in order to bring the plastic material of which both cover and support are made, to softening temperature, in such a way that after being pressed together for a certain length of time, they are welded together along their perimetral edge, where they are in contact with each other all around the photograph.

To ensure perfect sealing of the holder obtained in this manner, and in order to avoid rapid deterioration of the photograph due to humidity which may seep between the cover and support, perimetral welding is often carried out by means of an ultrasonic process, where there is contact between the edges of the cover and the support, pre-assembled as described above.

This manufacturing process has considerable disadvantages, first of all, the high production cost of each model of holder, due to the fact that it is necessary to have a pair of moulds, one for the injection of the transparent cover and the other for the injection of the opaque support, for each shape and size of holder.

Moreover, it should be said that since it is necessary to heat the holder until reaching the softening temperature of the cover and the support, which are made separately by injection in plastic material, it is not possible to use special photographic paper for colour prints which, without doubt, would ensure that the photograph last longer maintaining the clarity of colour and tone, but which unfortunately cannot be subjected to high temperatures without adversely affecting the quality.

The aim of the instant invention is to create a new industrial process for the manufacture of said photograph holders, which, on the one hand considerably reduces the production costs compared with the current art and on the other hand, permits the use of colour photographs printed on special paper, in order to guarantee perfect conservation of the colours which stand up to the course of time, in spite of long exposure to sunlight.

The industrial process according to the invention is characterised by the fact that it does not require moulds of distinctly different sizes for the cover and the support of the holder, which are made together, from two sheets in acrylic resin, like plexiglass for example, one of which is opaque and the other transparent, these being positioned one on top of the other and clamped within a special form, where there is a matrix punch in operation, which presses against the two sheets; after they have been pre-heated to softening temperature, compressed air is blown onto them, so that they are moulded at the same time by contact with the external surface of the matrix punch.

By means of this compressed air moulding system, two slots with the same profile as the matrix punch, are formed on the two sheets, and are designed to match exactly and fit into each other .

Once the two sheets are moulded in this manner, they are separated so as to be able to carry out the sizing of the bonding agent within the slot obtained on the transparent sheet, into which the slot obtained on the opaque sheet is immediately inserted; the photograph printed on special paper is fixed externally at the bottom of the opaque sheet.

Once the two sheets have been put together, with the photograph positioned in between the two slots, drying of the bonding agent is carried out in an oven, after which the perimetral cutting of the two sheets simultaneously is effected at the two edges of the two slots, which are now firmly sealed and welded together by means of the bonding agent, in such a way as to obtain the desired photograph holder. It is immediately clear that in the manufacturing process according to the invention, in order to obtain holders of different shapes and sizes, it is merely necessary to provide different matrix punches, the construction costs of which are considerably lower than those of the corresponding pairs of moulds currently required according to the current production technique.

For further clarity of explanation, the description of the invention continues with reference to the attached drawings which are reproduced for illustrative and not limitative purposes and in which, the various figures schematically illustrate the operational phases of the industrial process according to the invention.

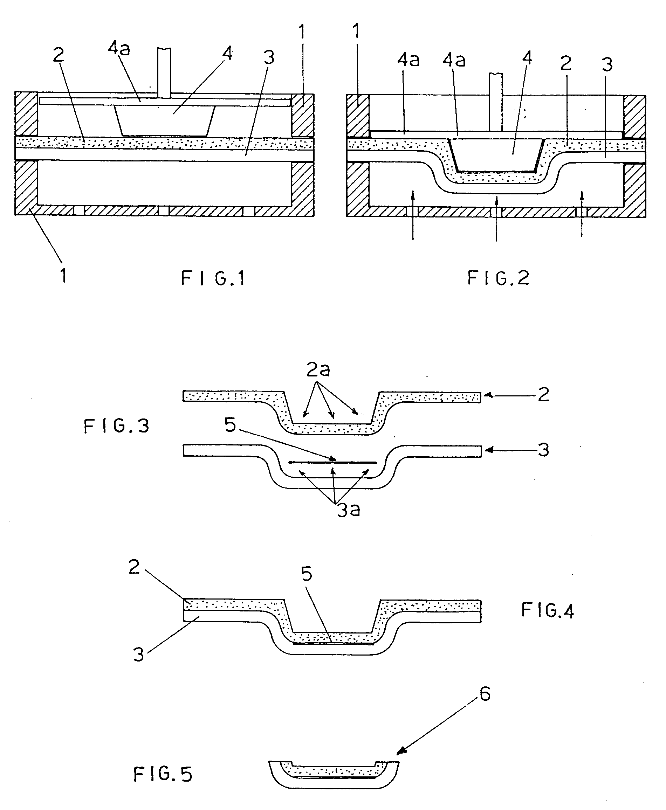

With reference to the abovementioned figures, the industrial process according to the invention comprises the following series of operational phases :
a) Positioning and clamping within a special form (1) of two plexiglass sheets one on top of the other, the one (2) on top being opaque, and the other (3), on the bottom being transparent, having previously applied a soapy, oily, solution between the two sheets (2) and (3) (see Fig.1).
b) Having previously brought the two sheets to softening temperature, the lowering onto these two sheets ( 2 and 3) of a matrix punch (4), projecting from the bottom of a base (4a), (see Fig.2).
c) Blowing of compressed air under the transparent sheet ( 3), so as to obtain the simultaneous moulding of the two sheets positioned one on top of the other ( 2 and 3), by contact with the matrix punch (4), and with the base ( 4a), (see Fig.2).
d) Separation of the two sheets once they have been moulded and cooled down, sizing of the bonding agent on the sheet (3) and especially inside the slot ( 3a) obtained on the transparent sheet (3) and positioning of the photograph (5), externally at the bottom of the slot (2a), obtained on the opaque sheet (2), (see Fig.3)
e) Re-assembly of the two sheets (2 and 3), with the slots (2a and 3a) perfectly matched; drying of the bonding agent in an oven at controlled temperature, which the special paper used for colour printing of the photograph (5) is able to withstand (see Fig.4).

## Claims

1. Industrial process for the manufacture of holders containing photographs for tombs or tombstones, characterised by the fact that it is carried out in the following sequence of operational phases :
a) Positioning and clamping of two plexiglass sheets, one on top of the other within a special form (1), the one at the top being opaque (2) and the other at the bottom being transparent (3), having previously applied a soapy, oily solution between the two sheets ( 2 and 3);
b) Having previously brought the two sheets to softening temperature, the lowering onto the two sheets (2 and 3) of a matrix punch (4), projecting from the bottom of a base (4a);
c) The blowing of compressed air under the transparent sheet (3), so as to obtain the simultaneous moulding of the two sheets, positioned one over the other (2 and 3), by contact with the matrix punch (4) and with the base (4a);
d) Separation of the two sheets once they have been moulded and cooled down; sizing of the bonding agent on the sheet (3) and especially inside the slot (3a) obtained on the transparent sheet (3) and positioning of the photograph (5), externally at the bottom of the slot (2a) obtained on the opaque sheet (2);
e) Re-assembly of the two sheets (2 and 3), with the slots (2a and 3a) perfectly matched, drying of the bonding agent in an oven at controlled temperature, which the special paper used for the colour printing of the photograph (5), is able to withstand;
f) Cutting of the two sheets (2 and 3) at the edges of the two slots (2a and 3a), so as to isolate the actual holder (6) from the two sheets (2 and 3).

## Patentansprüche

1. Industrieller Prozess zur Herstellung von Bildchen, die ein Erinnerungsfoto für Gräber oder Grabsteine enthalten, dadurch gekennzeichnet, daß sie mit folgenden Herstellungsphasen verwirklicht werden:
a) Positionierung und Befestigung von zwei übereinandergelagerten Plexiglasplatten im Innern einer eigens dafür vorgesehenen Formschale (1), von denen die obere (2) opak und die untere (3) durchsichtig ist, mit vorheriger Auftragung einer seifige oder öligen Lösung zwischen den beiden Platten (2) und (3);
b) Herablassen auf die Platten (2 und 3), die vorher auf den Erweichungspunkt gebracht worden sind, eines Matrizen-Stempels (4), der unten aus der Plattform herausragt (4a);
c) Einblasen von Druckluft unter die durchsichtige Platte (3), um eine gleichzeitige Selbsmodellierung der beiden übereinandergelagerten Platten (2 und 3) zu erreichen, aufgrund von Anhaftung an den Matrizen-Stempel (4) und an die Plattform (4a);
d) Öffnung der beiden modellierten und abgekühlten Platten; Aufbringen eines Klebers auf die Platte (3) und insbesonders in das Innere der auf der durchsichtigen Platte (3) erhaltenen beckenförmigen Vertiefung und Befestigung des Fotos (5) außen an den Boden der auf der opaken Platte erhaltenen beckenförmigen Vertiefung (2a);
e) Annäherung der beiden Platten (2 und 3) und perfekte Anpassung der beckenförmigen Vertiefungen (2 und 3); Trocknung des Klebers in einem Ofen bei mäßiger Temperatur, die in jedem Fall das für den Farbdruck der Fotos (5) verwendete Spezialpapier nicht beschädigen darf;
f) Auseinanderschneiden der beiden Platten (2 und 3) an den Rändern der beckenförmigen Vertiefungen (2a) und (3a) zur Isolierung des Bildchens (6) von den Platten (2 und 3).

## Revendications

1. Procédé industriel pour la fabrication de porte-photo contenant une photo pour tombes ou monuments funéraires caractérisé en ce que ledit procédé s'effectue selon la suivante succession de phases opérationnelles:
a) installer et bloquer, à l'interne d'un coffrage de moulage (1) prévu à cet effet, deux plaques superposées en plexiglas, celle supérieure (2) étant opaque, celle inférieure (3) étant transparente, en appliquant préalablement une solution savonneuse ou huileuse entre les deux plaques (2) et (3);
b) sur les plaques (2) et (3) préalablement portées à température de ramollissement, descente d'un poinçonmatrice (4) forjettant inférieurement d'une plate-forme (4a);
c) soufflage d'air comprimé sous la plaque transparente (3) de manière à obtenir un auto-moulage simultané des deux plaques superposées (2 et 3) par adhérence au poinçonmatrice (4) et à la plate-forme (4a);
d) ouverture des deux plaques modelées et refroidies; application d'un adhésif sur la plaque (3) et en particulier à l'interne de la cuvette (3a) obtenue sur la plaque transparente (3) et fixation de la photo (5) à l'externe du fond de la cuvette (2a) obtenue sur la plaque opaque (2);
e) rapprochement des deux plaques (2 et 3) avec couplage parfait entre les cuvettes (2a et 3a); séchage de l'adhésif au four à température réduite et de toute façon supportable pour le papier spécial utilisé pour le développement à couleurs de la photo (5);
f) tranchage des deux plaques (2 et 3) en correspondance des bords des deux cuvettes (2a) et (3a) de manière à isoler le porte-photo (6) des plaques (2 et 3).
